# EUROPEAN PATENT SPECIFICATION

(11) **EP 3 029 985 B1**
(45) Date of publication and mention of the grant of the patent: **25.04.2018**
(21) Application number: 14833101.0
(22) Date of filing: 28.07.2014
(51) Int. Cl.: H04W 28/14, H04W 24/10, H04W 28/16, H04W 72/04, H04L 5/00, H04W 72/12

(54) **MOBILE STATION AND MOBILE COMMUNICATION SYSTEM**
MOBILSTATION UND MOBILKOMMUNIKATIONSSYSTEM
STATION MOBILE ET SYSTÈME DE COMMUNICATION MOBILE

(30) Priority: 31.07.2013 JP 2013158997
(43) Date of publication of application: 08.06.2016
(73) Proprietor: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2014/069829
(87) International publication number: WO 2015/016181

(56) References cited:
- EP-A1- 2 903 342
- EP-A1- 2 905 985
- WO-A1-2014/049971
- WO-A1-2014/054568
- PANTECH: "Considerations on Scheduler Architecture for dual connectivity", 3GPP DRAFT; R2-131095, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 5 April 2013 (2013-04-05), XP050699252, Retrieved from the Internet: URL:http://www.3gpp.org/ftp/tsg_ran/WG2_RL 2/TSGR2_81bis/Docs/ [retrieved on 2013-04-05]
- RENESAS MOBILE EUROPE: 'Protocol architecture for dual connectivity' 3GPP TSG-RAN WG2#81BIS R2-131174 06 April 2013, XP050699441
- RENESAS MOBILE EUROPE: 'Protocol impact of dual connectivity for UE and eNB' 3GPP TSG-RAN WG2#82 R2-131847 11 May 2013, XP050700074
- QUALCOMM INCORPORATED: 'BSR considerations for dual connectivity with bearer splitting' 3GPP TSG-RAN WG2#84 R2-133997 02 November 2013, XP050736805
- RENESAS MOBILE EUROPE: 'On protocol stack impacts of dual connectivity' 3GPP TSG-RAN WG2#83 R2-132405 09 August 2013, XP050718161

## Description

### TECHNICAL FIELD

The present invention relates to a mobile station and a mobile communication system.

### BACKGROUND ART

LTE (Long Term Evolution) stipulates that a mobile station UE should perform the following procedures when data to be transmitted in an uplink is generated (see Non-patent document 1).

In step 1, the mobile station UE transmits a scheduling request signal to a radio base station eNB.

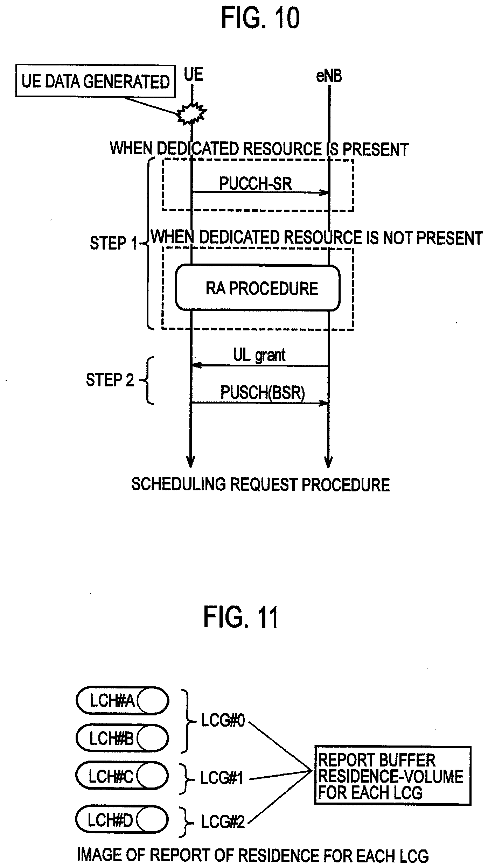

As shown in Fig. 10, when the mobile station UE has a dedicated uplink resource (a PUCCH-scheduling request), the mobile station UE transmits the scheduling request signal to the radio base station eNB by using the uplink resource.

On the other hand, when the mobile station UE does not have a dedicated uplink resource, the mobile station UE executes an RA (Random Access) procedure.

In step 2, the mobile station UE transmits a BSR (Buffer Status Report) to the radio base station eNB.

As shown in Fig. 10, the mobile station UE transmits the BSR to the radio base station eNB via a PUSCH (Physical Uplink Shared Channel) corresponding to "UL grant" assigned in step 1.

Here, in the case where the RA procedure is executed, the "UL grant" is assigned to the mobile station UE by way of "RA response".

As shown in Fig. 11, the mobile station UE is configured to use the BSR to report a total cumulative volume (a buffer residence-volume) of the data to be transmitted, for each LCG (Logical Channel Group) including an LCH (Logical Channel) where the data to be transmitted is accumulated in its buffer.

In the example of Fig. 11, the mobile station UE is configured to report the total cumulative volume of the data in the buffer not for each of LCHs #A to #D but instead for each of LCGs #0 to #2.

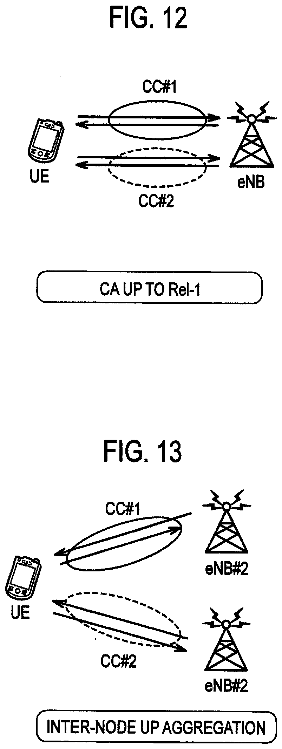

Meanwhile, CA (Carrier Aggregation) defined in LTE Release 10 has made it possible to achieve high throughput by performing simultaneous communication using a CC (Component Carrier) #1 and a CC #2 under the same radio base station eNB as shown in Fig. 12.

On the other hand, "Inter-node UP aggregation" to achieve high throughput by performing simultaneous communication using the CC #1 and the CC #2 under different radio base stations eNB#1 and eNB#2 as shown in Fig. 13, by extending the CA according to LTE Release 10, is under consideration in LTE Release 12 (Non-patent document 2).

For example, if a single radio base station eNB cannot accommodate all the CCs, then it is necessary to carry out the "Inter-node UP aggregation" in order to achieve throughput as high as that according to LTE Release 10.

### PRIOR ART DOCUMENTS

### NON-PATENT DOCUMENTS

Non-patent document 1: 3GPP TS36.321
Non-patent document 2: 3GPP TDoc R2-131782

3GPP contribution R2-131095 discusses considerations on scheduler architecture for dual connectivity. The document discusses a scenario in which a UE is connected to cells located in different eNBs. In one discussed architecture, a UE and a gateway are connected by two base stations, each of which controls its uplink scheduling. Accordingly, each scheduler cannot know how many uplink resources will be granted by the other scheduler in a given time interval. In another discussed architecture, common scheduling is used where only one of the base stations has a PDCP layer.

3GPP contributions R2-131174 and R2-131847 discuss protocol architectures for dual connectivity. In particular, these documents discuss where to split a user plane of communications, and how RRC connections should be configured for two eNBs.

EP 2903342 A1 is a document cited under Article 54(3) EPC. In this document, a mobile communication system includes a mobile station, a first base station and a second base station configured to perform radio communication with the mobile station, and a gateway station configured to perform communication with the first base station and the second base station or with the mobile station via the first base station and the second base station. One communication is performed between the mobile state and the gateway station by establishing a first communication connection between the gateway station and the first base station, a first radio communication connection between the first base station and the mobile station, and a second radio communication connection between the second base station and the mobile station. This enables a normal change of a cell during communication without any load on a network.

EP 2905985 A1 is a document cited under Article 54(3) EPC. In this document, a terminal apparatus has a communication protocol stack having a hierarchical structure and communicates with a base station apparatus through a plurality of cells. When a first layer of the communication protocol stack receives data from the base station apparatus, the first layer receives uplink grant data from the base station apparatus, the first layer notifies a second layer of the uplink grant and information of cells to which the uplink grant is transmitted, a third layer notifies the second layer of logical channel information for classifying logical channels corresponding to the respective cells, and the second layer distributes the data of the logical channels to the respective cells on the basis of the logical channel information, the uplink grant, and the information of the cells to which the uplink grant is transmitted.

### SUMMARY OF THE INVENTION

Nonetheless, in a current LTE method, the mobile station UE is configured to use the BSR to notify the radio base station eNB of a residence-volume of all the uplink signals stagnant at a certain point of time as the buffer residence-volume.

Accordingly, when this configuration is directly applied to the "Inter-node UP aggregation" , there is a problem that the mobile station UE may receive the "UL grant" excessively from the multiple base stations eNB, which may lead to deterioration in resource use efficiency.

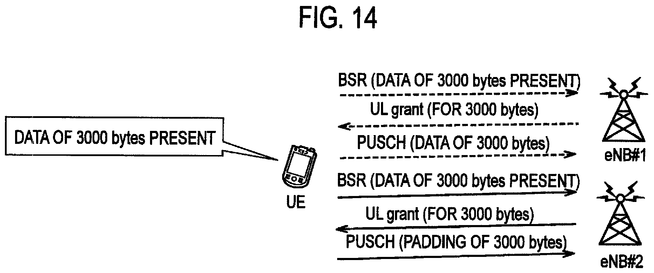

For example, as shown in Fig. 14, an uplink signal residing in the mobile station UE is assumed to have a data volume of 3000 bytes. When a BSR trigger condition is met, the radio base station eNB#1 and the radio base station eNB#2 may receive the BSR of the same content, namely, the BSR notifying that the buffer residence-volume is 3000 bytes, since the mobile station UE is configured to transmit the BSR to the radio base stations eNB which assign the "UL grant" to the mobile station UE.

As a consequence, both of the radio base station eNB#1 and the radio base station eNB#2 assign the "UL grant" for 3000 bytes to the mobile station UE at the same time, and the mobile station UE will transmit the uplink signal of 3 000 bytes to the radio base station eNB#1 and transmit padding of 3000 bytes to the radio base station eNB#2.

The present invention has been made in view of the above-mentioned problem. An objective of the present invention is to provide a mobile station and a mobile communication system, which are capable of eliminating waste of resources attributed to transmission of a BSR in "Inter-node UP aggregation".

The present invention provides mobile stations and mobile communication systems as set out in the attached claims.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile station UE according to the first embodiment of the present invention.
[Fig. 3] Fig. 3 is a diagram showing an example of a format of a BSR to be transmitted by the mobile station UE according to the first embodiment of the present invention.
[Fig. 4] Fig. 4 is a diagram showing an example of a format of a BSR to be transmitted by the mobile station UE according to the first embodiment of the present invention.
[Fig. 5] Fig. 5 is a diagram for explaining an operation of the mobile communication system according to the first embodiment of the present invention.
[Fig. 6] Fig. 6 is a flowchart showing an operation of the mobile station UE according to the first embodiment of the present invention.
[Fig. 7] Fig. 7 is a diagram for explaining a mobile communication system according to a first modified example of the present invention.
[Fig. 8] Fig. 8 is a flowchart showing an operation of the mobile station UE according to a first modified example of the present invention.
[Fig. 9] Fig. 9 is a diagram for explaining a mobile communication system according to a second modified example of the present invention.
[Fig. 10] Fig. 10 is a diagram for explaining the related art.
[Fig. 11] Fig. 11 is a diagram for explaining the related art.
[Fig. 12] Fig. 12 is a diagram for explaining the related art.
[Fig. 13] Fig. 13 is a diagram for explaining the related art.
[Fig. 14] Fig. 14 is a diagram for explaining the related art.

### MODES FOR CARRYING OUT THE INVENTION

### (Mobile Communication System According to First Embodiment of Present Invention)

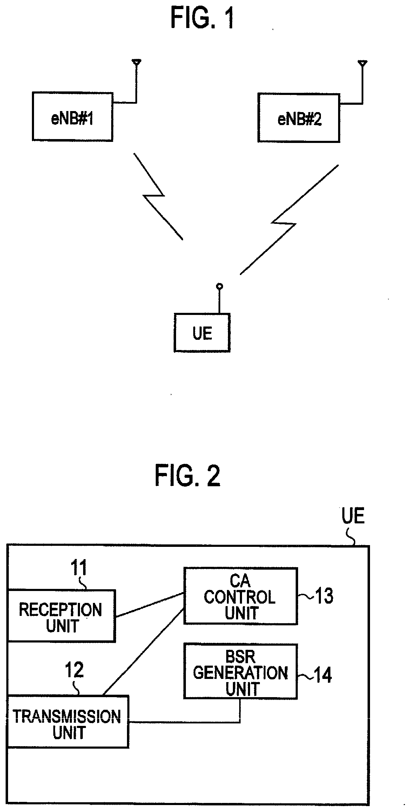

A mobile communication system according to a first embodiment of the present invention will be described with reference to Fig. 1 to Fig. 6.

As shown in Fig. 1, a mobile communication system of this embodiment is an LTE mobile communication system which includes a radio base station eNB#1, a radio base station eNB#2, and a mobile station UE.

In the mobile communication system of this embodiment, the mobile station UE is configured to be capable of performing CA by using a CC #1 under the radio base station eNB#1 and a CC #2 under the radio base station eNB#2.

In other words, the mobile communication system of this embodiment is configured to be capable of performing "Inter-node UP aggregation".

Here, when the CA is performed, the mobile station UE is configured to perform communication by using one or more EPS (Evolved Packet System) bearers.

As shown in Fig. 2, the mobile station UE of this embodiment includes a reception unit 11, a transmission unit 12, a CA control unit 13, and a BSR generation unit 14.

The reception unit 11 is configured to receive various signals transmitted from the radio base station eNB#1 and the radio base station eNB#2, while the transmission unit 12 is configured to transmit various signals to the radio base station eNB#1 and the radio base station eNB#2.

The CA control unit 13 is configured to perform control concerning the above-mentioned CA, i.e., the "Inter-node UP aggregation" in conjunction with the reception unit 11 and the transmission unit 12.

The BSR generation unit 14 is configured to generate a BSR #1 addressed to the radio base station eNB#1 and a BSR #2 addressed to the radio base station eNB#2.

Here, concerning a buffer residence-volume (a data volume of stagnant uplink signals) in the same EPS bearer, the transmission unit 12 is configured to distinguish between a buffer residence-volume notified to the radio base station eNB#1 and a buffer residence-volume notified to the radio base station eNB#2 when the above-mentioned CA is performed.

For example, in the case where the above-mentioned CA is performed, the transmission unit 12 is configured, when an uplink signal of 1000 bytes is generated as an uplink signal to be transmitted in the EPS bearer involved in the CA, to send the radio base station eNB#1 the BSR #1 for notifying a buffer residence-volume (1000 bytes), and then when an uplink signal of 500 bytes is further generated as an uplink signal to be transmitted in the EPS bearer involved in the CA, to send the radio base station eNB#2 the BSR #2 for notifying a buffer residence-volume (500 bytes) other than the buffer residence-volume (1000 bytes) notified to the radio base station eNB#1, out of the buffer residence-volume (1500 bytes) in the EPS bearer.

Meanwhile, in order that the CC (a cell) under the radio base station eNB#2 (or the radio base station eNB#1) can promptly allocate an uplink resource when allocation of an uplink resource by the CC (a cell) under the radio base station eNB#1 (or the radio base station eNB#2) is disabled due to a reason such as deterioration in radio quality, the transmission unit 12 may be configured to notify the radio base station eNB#1 (or the radio base station eNB#2) of the buffer residence-volume notified to the radio base station eNB other than the radio base station eNB#1 (or the radio base station eNB#2) by using the BSR #1 (or the BSR #2).

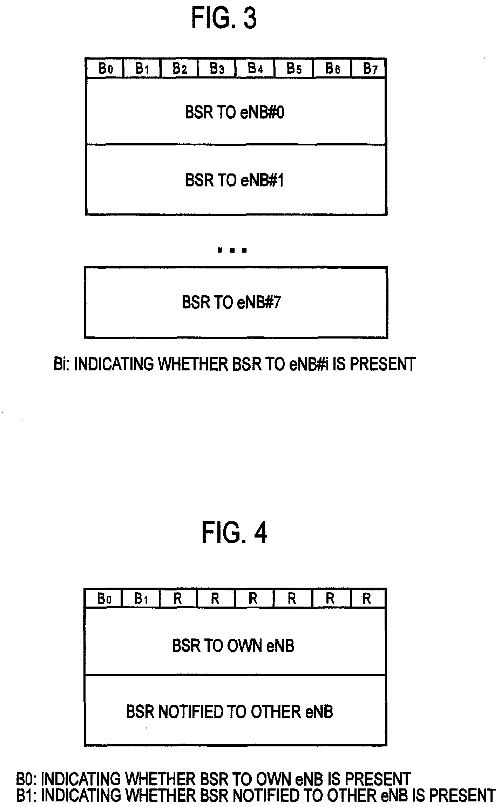

Here, as shown in Fig. 3, the BSR #1 (or the BSR #2) may be designed to use bits from B0 to B7 in order to indicate to which radio base station eNB the above-mentioned buffer residence-volume is notified.

Alternatively, as shown in Fig. 4, the BSR #1 and the BSR #2 may be designed to use one bit in order to simply indicate whether or not the above-mentioned buffer residence-volume is notified to a different radio base station eNB.

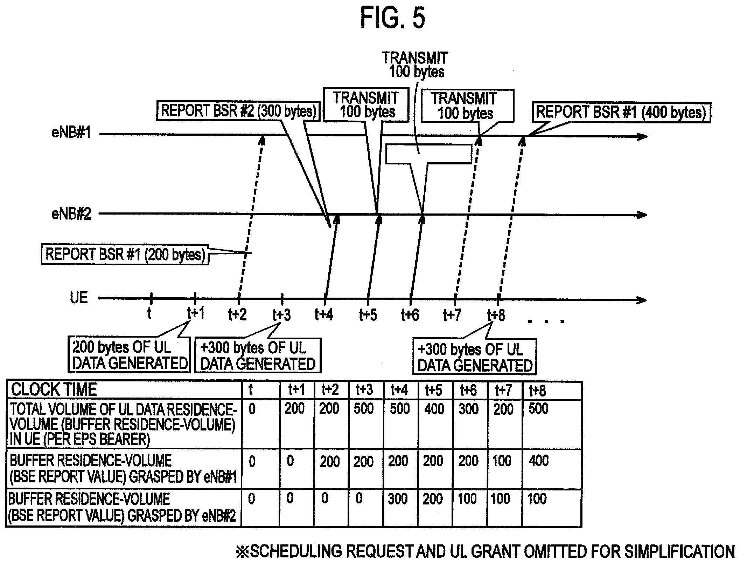

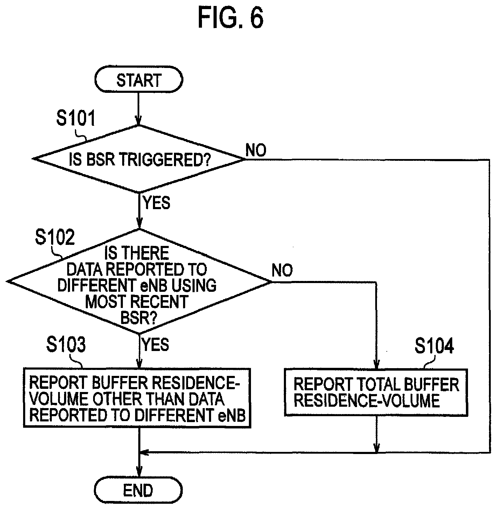

Operations of the mobile communication system of this embodiment will be described below with reference to Fig. 5 and Fig. 6.

First, an operation by the mobile station UE to transmit the BSR when the "Inter-node UP aggregation" is performed in the mobile communication system of this embodiment will be described with reference to Fig. 5.

In the following description, the "Inter-node UP aggregation" is assumed to involve one EPS bearer for the sake of convenience.

As shown in Fig. 5, at clock time t, a buffer residence-volume (a total volume) in the EPS bearer involved in the "Inter-node UP aggregation" is 0 byte while a buffer residence-volume (in the aforementioned EPS bearer) grasped by each of the radio base station eNB#1 and the radio base station eNB#2 is also 0 byte.

When an uplink signal (UL data) of 200 bytes to be transmitted in the EPS bearer involved in the "Inter-node UP aggregation" is generated at clock time t+1, the mobile station UE sends the radio base station eNB#1 the BSR #1 at clock time t+2, notifying that the buffer residence-volume is 200 bytes.

As a result, the buffer residence-volume (in the aforementioned EPS bearer) grasped by the radio base station eNB#1 at the clock time t+2 is 200 bytes. Here, the buffer residence-volume (the total volume) in the aforementioned EPS bearer is equal to 200 bytes.

When an uplink signal (UL data) of 300 bytes to be transmitted in the EPS bearer is generated at clock time t+3, the mobile station UE sends the radio base station eNB#2 the BSR #2 at clock time t+4, notifying that the buffer residence-volume is 300 bytes.

As a result, the buffer residence-volume (in the aforementioned EPS bearer) grasped by the radio base station eNB#2 at the clock time t+4 is 300 bytes. Here, the buffer residence-volume (the total volume) in the aforementioned EPS bearer is equal to 500 bytes.

In response to "UL grant" from the radio base station eNB#2, the mobile station UE sends the radio base station eNB#2 an uplink signal (UL data) of 100 bytes at clock time t+5, and sends the radio base station eNB#2 an uplink signal (UL data) of 100 bytes at clock time t+6.

As a result, the buffer residence-volume (in the aforementioned EPS bearer) grasped by the radio base station eNB#2 at the clock time t+6 is 100 bytes. Here, the buffer residence-volume (the total volume) in the aforementioned EPS bearer is equal to 300 bytes.

In response to "UL grant" from the radio base station eNB#1, the mobile station UE sends the radio base station eNB#1 an uplink signal (UL data) of 100 bytes at clock time t+7.

As a result, the buffer residence-volume (in the aforementioned EPS bearer) grasped by the radio base station eNB#1 at the clock time t+7 is 100 bytes. Here, the buffer residence-volume (the total volume) in the aforementioned EPS bearer is equal to 200 bytes.

When an uplink signal (UL data) of 300 bytes to be transmitted in the EPS bearer is generated at clock time t+8, the mobile station UE sends the radio base station eNB#1 the BSR #1 at clock time t+8, notifying that the buffer residence-volume is 400 bytes.

As a result, the buffer residence-volume (in the aforementioned EPS bearer) grasped by the radio base station eNB#1 at the clock time t+8 is 400 bytes. Here, the buffer residence-volume (the total volume) in the aforementioned EPS bearer is equal to 500 bytes.

Second, an operation of the mobile station UE of this embodiment will be described with reference to Fig. 6.

As shown in Fig. 6, in step S101, the mobile station UE determines whether or not a BSR is triggered, i.e., whether or not a BSR trigger condition is met.

The operation proceeds to step S102 in the case of "Yes", or the operation is terminated in the case of "No".

In step S102, the mobile station UE determines whether or not there is the buffer residence-volume notified to a different radio base station eNB by using the BSR.

The operation proceeds to step S103 in the case of "Yes", or the operation proceeds to step S104 in the case of "No".

In step S103, the mobile station UE uses the BSR to notify the buffer residence-volume other than the buffer residence-volume notified to the different radio base station eNB.

Meanwhile, in step S104, the mobile station UE uses the BSR to notify the total buffer residence-volume.

### (First Modified Example)

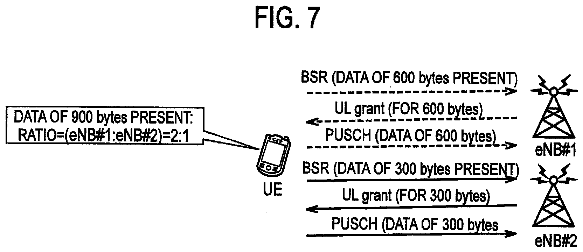

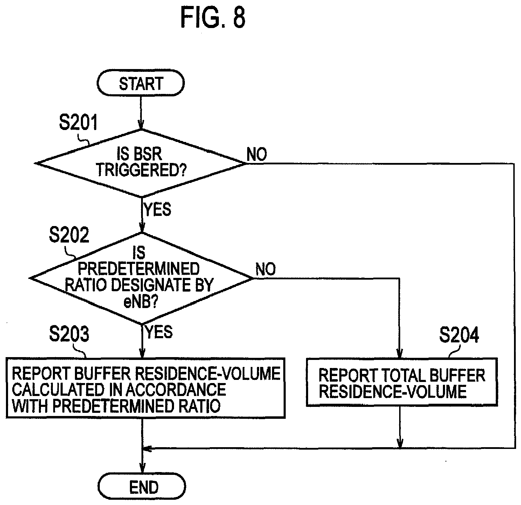

A mobile communication system according to a first modified example of the present invention will be described below with reference to Fig. 7 and Fig. 8 while focusing on different features from those of the mobile communication system according to the above-mentioned first embodiment.

In the mobile communication system according to the first modified example, the transmission unit 12 of the mobile station UE is configured to determine the buffer residence-volume to be notified by using the BSR #1 and the buffer residence-volume to be notified by using the BSR #2 out of the buffer residence-volume in the EPS bearer described above, on the basis of a predetermined ratio.

For example, in the case where the predetermined ratio is defined as (radio base station eNB#1 to radio base station eNB#2) = 2 to 1 as shown in Fig. 7, the transmission unit 12 of the mobile station UE is configured, when an uplink signal of 900 bytes is generated as the uplink signal to be transmitted in the EPS bearer inside the mobile station UE, to send the radio base station eNB#1 the BSR #1 notifying that the buffer residence-volume is 600 bytes and to send the radio base station eNB#2 the BSR #2 notifying that the buffer residence-volume is 300 bytes.

Here, the predetermined ratio may be designated by a network such as a radio base station eNB and a mobility management node MME.

Such designation may be performed by using an RRC (Radio Resource Control) layer or a MAC (Media Access Control) layer.

Meanwhile, the radio base station eNB may allocate the resource for transmitting the uplink signal by using the predetermined ratio.

In addition, the above-mentioned predetermined ratio may be designed to be determined on the basis of at least one of average data rates (or average throughputs) in the uplinks in the radio base station eNB#1 and the radio base station eNB#2, allocation ratios of resources of the uplinks to the mobile station UE, and radio quality (such as CQI) in the uplinks. In other words, the predetermined ratio may be designed to be updated as needed.

For example, the above-mentioned predetermined ratio may be designed such that a radio base station eNB with a faster average data rate mentioned above or a radio base station eNB with better radio quality is granted a higher proportion.

Meanwhile, the above-mentioned predetermined ratio may be designed to be reset when at least one of a connection re-establishment procedure, an Scell (Secondary Cell) deletion procedure, and an RA procedure takes place.

An operation of the mobile station UE of this modified example will be described below with reference to Fig. 8.

As shown in Fig. 8, in step S201, the mobile station UE determines whether or not the BSR is triggered, i.e., whether or not the BSR trigger condition is met.

The operation proceeds to step S202 in the case of "Yes", or the operation is terminated in the case of "No".

In step S202, the mobile station UE determines whether or not the above-mentioned predetermined ratio is designated by the network.

The operation proceeds to step S203 in the case of "Yes", or the operation proceeds to step S204 in the case of "No".

In step S203, the mobile station UE sends the radio base station eNB the BSR notifying the buffer residence-volume calculated in accordance with the predetermined ratio.

Meanwhile, in step S204, the mobile station UE uses the BSR to notify the total buffer residence-volume.

### (Second Modified Example)

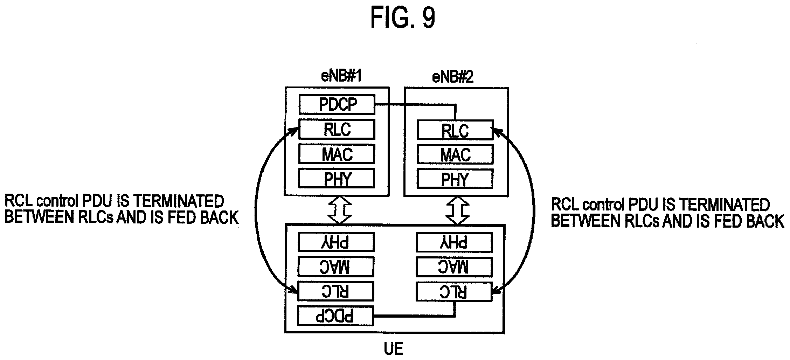

A mobile communication system according to a second modified example of the present invention will be described below with reference to Fig. 9 while focusing on different features from those of the mobile communication system according to the first embodiment and the first modified example mentioned above.

As shown in Fig. 9, the radio base station eNB#1 is provided with a physical (PHY) layer function, a MAC layer function as an upper layer function of the physical layer function, an RLC (Radio Link Control) layer function as an upper layer function of the MAC layer function, and a PDCP (Packet Data Convergence Protocol) layer function as an upper layer function of the RLC layer function.

On the other hand, the radio base station eNB#2 is provided with the physical (PHY) layer function, the MAC layer function as the upper layer function of the physical layer function, and the RLC layer function as the upper layer function of the MAC layer function. However, the radio base station eNB#2 is not provided with the PDCP layer function as the upper layer function of the RLC layer function.

In the above-described protocol stack, since the RLC layer function is terminated at each radio base station eNB#1/eNB#2, "control PDU (Packet Data Unit) " in the RLC layer such as "RLC status report" needs to be fed back to each radio base station eNB#1/eNB#2.

Accordingly, the mobile station UE is configured to transmit the "control PDU" in the RLC layer to each of the radio base station eNB#1 and the radio base station eNB#2.

In this case, the mobile station UE is configured not to notify the radio base station eNB#2 of a buffer residence-volume of the "control PDU" in the RLC layer in the mobile station UE corresponding to the RLC layer terminated at the radio base station eNB#1.

The foregoing feature of the present embodiment may be expressed as follows.

In summary, a first feature of the present embodiment is a mobile station UE including: a transmission unit 12 configured, when CA is performed by using a CC #1 under a radio base station eNB#1 (first radio base station) and a CC #2 under a radio base station eNB#2 (second radio base station), to send the radio base station eNB#1 a BSR #1 (first buffer status report) to notify a buffer residence-volume in an EPS bearer involved in the CA, and then to send the radio base station eNB#2 a BSR #2 (second buffer status report) to notify a buffer residence-volume other than the buffer residence-volume notified to the radio base station eNB#1 out of a buffer residence-volume in the EPS bearer.

According to the above-described feature, it is possible to avoid a situation in which both of the radio base station eNB#1 and the radio base station eNB#2 receive the BSR of the same content, and thus to eliminate waste of resources attributed to transmission of the BSR in the "Inter-node UP aggregation".

In the first feature of the present embodiment, the transmission unit 12 may be configured to use the BSR #2 to notify the radio base station eNB#2 of a buffer residence-volume notified to a radio base station other than the radio base station eNB#2.

According to the above-described feature, the CC (the cell) under the radio base station eNB#2 can promptly allocate the uplink resource when allocation of the uplink resource by the CC (the cell) under the radio base station eNB#1 is disabled due to a reason such as deterioration in radio quality.

In the first feature of the present embodiment, the transmission unit 12 may be configured to use the BSR #2 to notify the radio base station eNB#2 of a buffer residence-volume notified to the radio base station eNB#1.

According to the above-described feature, when the "Inter-node UP aggregation" is performed while involving the multiple radio base stations eNB, the radio base station eNB#2 can grasp the buffer residence-volume notified to each radio base station eNB (the radio base station eNB#1).

In the first feature of the present embodiment, the transmission unit 12 may be configured to determine a buffer residence-volume to be notified by using the BSR #1 and a buffer to reset the above-mentioned predetermined ratio and to set the ratio to an appropriate value again at the time of starting communication, detection of an anomaly, or the like.

In summary, a second feature of the present embodiment is a mobile communication system configured to enable a mobile station UE to perform CA by using a CC #1 under a radio base station eNB#1 and a CC #2 under a radio base station eNB#2, wherein the radio base station eNB#1 is provided with an RLC layer function, and a PDCP layer function as an upper layer function of the RLC layer function, the radio base station eNB#2 is provided with the RLC layer function but is not provided with the PDCP layer function as the upper layer function of the RLC layer function, the mobile station UE is configured to transmit a "control PDU (control signal) " in an RLC layer to each of the radio base station eNB#1 and the radio base station eNB#2, and the mobile station UE is configured not to notify the radio base station eNB#2 of a buffer residence-volume of the "control PDU" in the RLC layer in the radio base station eNB#1.

According to the above-described feature, in the above-mentioned protocol stack, the mobile station UE is configured to invariably transmit the "control PDU" in the RLC layer terminated at the radio base station eNB#1 to the radio base station eNB#1. Thus, it is possible to reduce a load associated with an action to notify the radio base station eNB#2 of the buffer residence-volume of the "control PDU".

It should be noted that the foregoing operations of the mobile station UE and the radio base stations eNB#1/eNB#2 may to reset the above-mentioned predetermined ratio and to set the ratio to an appropriate value again at the time of starting communication, detection of an anomaly, or the like.

In summary, a second feature of the present embodiment is a mobile communication system configured to enable a mobile station UE to perform CA by using a CC #1 under a radio base station eNB#1 and a CC #2 under a radio base station eNB#2, wherein the radio base station eNB# is provided with an RLC layer function, and a PDCP layer function as an upper layer function of the RLC layer function, the radio base station eNB#2 is provided with the RLC layer function but is not provided with the PDCP layer function as the upper layer function of the RLC layer function, the mobile station UE is configured to transmit a "control PDU (control signal)" in an RLC layer to each of the radio base station eNB#1 and the radio base station eNB#2, and the mobile station UE is configured not to notify the radio base station eNB#2 of a buffer residence-volume of the "control PDU" in the RLC layer in the radio base station eNB#1.

According to the above-described feature, in the above-mentioned protocol stack, the mobile station UE is configured to invariably transmit the "control PDU" in the RLC layer terminated at the radio base station eNB#1 to the radio base station eNB#1. Thus, it is possible to reduce a load associated with an action to notify the radio base station eNB#2 of the buffer residence-volume of the "control PDU".

It should be noted that the foregoing operations of the mobile station UE and the radio base stations eNB#1/eNB#2 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE or the radio base station eNB#1/eNB#2. Otherwise, the storage medium and the processor may be provided as discrete components inside the mobile station UE or the radio base station eNB#1/eNB#2.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the claims. Therefore, the description of the specification is intended for illustrative explanation only and does not impose any limited interpretation on the present invention.

### INDUSTRIAL APPLICABILITY

As described above, according to the present invention, it is possible to provide a mobile station and a mobile communication system, which are capable of eliminating waste of resources attributed to transmission of a BSR in "Inter-node UP aggregation".

### EXPLANATION OF THE REFERENCE NUMERALS

- eNB#1, eNB#2: radio base station
- UE: mobile station
- 11: reception unit
- 12: transmission unit
- 13: CA control unit
- 14: BSR generation unit

## Claims

1. A mobile station comprising:
a transmission unit (12) configured, when carrier aggregation is performed by using a component carrier under a first radio base station and a component carrier under a second radio base station, to send to the first radio base station a first buffer status report to notify a buffer residence-volume to be notified to the first radio base station, out of a buffer residence-volume which is a data volume of uplink signals stagnant in the mobile station, in a bearer involved in the carrier aggregation, and then to send to the second radio base station a second buffer status report to notify a buffer residence-volume other than the buffer residence-volume notified to the first radio base station out of a buffer residence-volume which is the data volume of uplink signals stagnant in the mobile station, in the bearer,
wherein the transmission unit is configured to use the second buffer status report to further notify the second radio base station of the buffer residence-volume notified to the first radio base station.

2. The mobile station according to claim 1, wherein the transmission unit (12) is configured to determine a buffer residence-volume to be notified to the first radio base station by using the first buffer status report and a buffer residence-volume to be notified to the second radio base station by using the second buffer status report out of the buffer residence-volume in the bearer, on the basis of a predetermined ratio.

3. The mobile station according to claim 2, wherein the predetermined ratio is designed to be determined on the basis of at least one of average data rates in uplinks in the first radio base station and the second radio base station, allocation ratios of resources of the uplinks to the mobile station, and radio quality in the uplinks.

4. The mobile station according to claim 2 or 3, wherein the predetermined ratio is designed to be reset when at least one of a connection re-establishment procedure, a secondary cell deletion procedure, and a random access procedure takes place.

5. A mobile communication system configured to enable the mobile station recited in claim 1 to perform carrier aggregation by using a component carrier under the first radio base station and a component carrier under the second radio base station, wherein
the first radio base station is provided with an RLC layer function, and a PDCP layer function as an upper layer function of the RLC layer function,
the second radio base station is provided with the RLC layer function but is not provided with the PDCP layer function as the upper layer function of the RLC layer function,
the mobile station is configured to transmit a control signal in an RLC layer to each of the first radio base station and the second radio base station, and
the mobile station is configured not to notify the second radio base station of a buffer residence-volume of the control signal in the RLC layer in the first radio base station.

## Patentansprüche

1. Mobilstation, umfassend:
eine Übertragungseinheit (12), die dazu konfiguriert ist, wenn Trägeraggregation durch Verwenden eines Komponententrägers unter einer ersten Funkbasisstation und eines Komponententrägers unter einer zweiten Funkbasisstation ausgeführt wird, einen ersten Pufferstatusbericht an die erste Funkbasisstation zu senden, um ein zu meldendes Pufferresidenzvolumen aus einem Pufferresidenzvolumen, das ein Datenvolumen von Uplink-Signalen ist, die in der Mobilstation in einem in der Trägeraggregation einbezogenen Träger stagnieren, an die erste Funkbasisstation zu melden, und danach einen zweiten Pufferstatusbericht an die zweite Funkbasisstation zu senden, um ein anderes Pufferresidenzvolumen als das an die erste Funkbasisstation gemeldete Pufferresidenzvolumen aus einem Pufferresidenzvolumen zu melden, das das Datenvolumen von Uplink-Signalen ist, die in der Mobilstation im Träger stagnieren,
wobei die Übertragungseinheit dazu konfiguriert ist, den zweiten Pufferstatusbericht zu verwenden, um weiter die zweite Funkbasisstation über das an die erste Funkbasisstation gemeldete Pufferresidenzvolumen zu unterrichten.

2. Mobilstation nach Anspruch 1, wobei die Übertragungseinheit (12) dazu konfiguriert ist, ein an die erste Funkbasisstation zu meldendes Pufferresidenzvolumen durch Verwenden des ersten Pufferstatusberichts, und ein an die zweite Funkbasisstation zu meldendes Pufferresidenzvolumen durch Verwenden des zweiten Pufferstatusberichts aus dem Pufferresidenzvolumen im Träger auf der Basis eines vorbestimmten Verhältnisses zu bestimmen.

3. Mobilstation nach Anspruch 2, wobei das vorbestimmte Verhältnis dazu ausgelegt ist, auf der Basis von mindestens einem aus durchschnittlichen Datenraten in Uplinks in der ersten Funkbasisstation und der zweiten Funkbasisstation, Ressourcenzuweisungsverhältnissen der Uplinks zur Mobilstation, und Funkqualität in den Uplinks bestimmt zu werden.

4. Mobilstation nach Anspruch 2 oder 3, wobei das vorbestimmte Verhältnis dazu ausgelegt ist, zurückgesetzt zu werden, wenn mindestens eines aus einem Verbindungsneuaufbauvorgang, einem Löschvorgang sekundärer Zellen, und einem Direktzugriffsvorgang stattfindet.

5. Mobilkommunikationssystem, das dazu konfiguriert ist, der in Anspruch 1 genannten Mobilstation zu ermöglichen, Trägeraggregation durch Verwenden eines Komponententrägers unter der ersten Funkbasisstation und eines Komponententrägers unter der zweiten Funkbasisstation auszuführen, wobei
die erste Funkbasisstation mit einer RLC-Schichtfunktion, und einer PDCP-Schichtfunktion als eine obere Schichtfunktion der RLC-Schichtfunktion versehen ist,
die zweite Funkbasisstation mit der RLC-Schichtfunktion versehen ist, aber nicht mit der PDCP-Schichtfunktion als der oberen Schichtfunktion der RLC-Schichtfunktion versehen ist,
die Mobilstation dazu konfiguriert ist, ein Steuersignal in einer RLC-Schicht an jede aus der ersten Funkbasisstation und der zweiten Funkbasisstation zu übertragen, und
die Mobilstation dazu konfiguriert ist, die zweite Funkbasisstation nicht über ein Pufferresidenzvolumen des Steuersignals in der RLC-Schicht in der ersten Funkbasisstation zu unterrichten.

## Revendications

1. Station mobile comprenant:
une unité de transmission (12) configurée, quand une agrégation de porteuses est effectuée en utilisant une porteuse composante sous une première station de base radio et une porteuse composante sous une seconde station de base radio, pour envoyer à la première station de base radio un premier rapport d'état de mémoire tampon pour notifier un volume de résidence de mémoire tampon à notifier à la première station de base radio, en dehors d'un volume de résidence de mémoire tampon qui est un volume de données de signaux de liaison montante stagnants dans la station mobile, dans une porteuse impliquée dans l'agrégation de porteuses, et ensuite pour envoyer à la seconde station de base radio un second rapport d'état de mémoire tampon pour notifier un volume de résidence de mémoire tampon autre que le volume de résidence de mémoire tampon notifié à la première station de base radio, en dehors d'un volume de résidence de mémoire tampon qui est le volume de données de signaux de liaison montante stagnants dans la station mobile, dans la porteuse,
dans laquelle l'unité de transmission est configurée pour utiliser le second rapport d'état de mémoire tampon pour notifier en outre à la seconde station de base radio le volume de résidence de mémoire tampon notifié à la première station de base radio.

2. Station mobile selon la revendication 1, dans laquelle l'unité de transmission (12) est configurée pour déterminer un volume de résidence de mémoire tampon à notifier à la première station de base radio en utilisant le premier rapport d'état de mémoire tampon et un volume de résidence de mémoire tampon à notifier à la seconde station de base radio en utilisant le second rapport d'état de mémoire tampon en dehors du volume de résidence de mémoire tampon dans la porteuse, sur la base d'un rapport prédéterminé.

3. Station mobile selon la revendication 2, dans laquelle le rapport prédéterminé est conçu pour être déterminé sur la base d'au moins un parmi des débits de données moyens dans des liaisons montantes dans la première station de base radio et la seconde station de base radio, des taux d'allocation de ressources des liaisons montantes à la station mobile, et une qualité radio dans les liaisons montantes.

4. Station mobile selon la revendication 2 ou 3, dans laquelle le rapport prédéterminé est conçu pour être réinitialisé quand au moins une parmi une procédure de rétablissement de connexion, une procédure d'élimination de cellule secondaire et une procédure d'accès aléatoire a lieu.

5. Système de communication mobile configuré pour permettre à la station mobile selon la revendication 1 d'effectuer une agrégation de porteuses en utilisant une porteuse composante sous une première station de base radio et une porteuse composante sous une seconde station de base radio, dans lequel
la première station de base radio est dotée d'une fonction de couche RLC et d'une fonction de couche PDCP comme une fonction de couche supérieure de la fonction de couche RLC,
la seconde station de base radio est dotée de la fonction de couche RLC mais n'est pas dotée de la fonction de couche PDCP comme la fonction de couche supérieure de la fonction de couche RLC,
la station mobile est configurée pour transmettre un signal de commande dans une couche RLC à chacune de la première station de base radio et la seconde station de base radio, et
la station mobile est configurée pour ne pas notifier à la seconde station de base radio un volume de résidence de mémoire tampon du signal de commande dans la couche RLC dans la première station de base radio.
